# EUROPEAN PATENT SPECIFICATION

(11) **EP 3 352 634 B1**
(45) Date of publication and mention of the grant of the patent: **14.08.2019**
(21) Application number: 15767551.3
(22) Date of filing: 25.09.2015
(51) Int. Cl.: A47K 5/12, B05B 11/00

(54) **PUMP WITH A POLYMER SPRING**
PUMPE MIT EINER POLYMERFEDER
POMPE À RESSORT POLYMÈRE

(43) Date of publication of application: 01.08.2018
(73) Proprietor: Essity Hygiene and Health Aktiebolag, 405 03 Göteborg (SE)
(72) Inventor: NILSSON, Hugo, S-341 33 Ljungby (SE); BERGMAN, Peter, S-405 03 Göteborg (SE); LINDSTRÖM, Håkan, S-405 03 Göteborg (SE)
(74) Representative: Nederlandsch Octrooibureau
(86) International application number: PCT/EP2015/072151
(87) International publication number: WO 2017/050392

(56) References cited:
- WO-A1-2013/035316
- IT-A1- MI20 130 336
- JP-A- H1 047 400
- JP-A- H1 072 052
- US-A1- 2015 136 122

## Description

### TECHNICAL FIELD

The present invention relates to pumps of the type used for dispensing fluids and more particularly to a spring for use in a pump for dispensing cleaning, sterilising or skin care product, e.g. products such as soaps, gels, disinfectants, moisturizer and the like. The invention is specifically directed to pumps and springs that are axially compressible and that cause dispensing by an axial reduction in volume of a pump chamber.

### BACKGROUND

Fluid dispensers of various types are known. In particular, for dispensing of cleaning products such as soaps, there are a wide variety of manually or automatically actuated pumps that dispense a given quantity of the product into a user's hand.

Consumer products may comprise a dispensing outlet as part of the package, actuated by a user pressing down the top of the package. Such packages use a dip tube extending below the level of the liquid and a piston pump that aspirates the liquid and dispenses it downwards through an outlet spout.

Commercial dispensers frequently use inverted disposable containers that can be placed in dispensing devices, affixed to walls of washrooms or the like. The pump may be integrated as part of the disposable container or may be part of the permanent dispensing device or both. Such devices are generally more robust and, as they are affixed to the wall, greater freedom is available in the direction and amount of force that is required for actuation. Such devices may also use sensors that identify the location of a user's hand and cause a unit dose of the product to be dispensed. This avoids user contact with the device and the associated cross-contamination. It also prevents incorrect operation that can lead to damage and premature ageing of the dispensing mechanism.

A characteristic of inverted dispensers is the need to prevent leakage. Since the pump outlet is located below the container, gravity will act to cause the product to escape if there is any leakage through the pump. This is particularly the case for relatively volatile products such as alcohol based solutions. Achieving leak free operation is often associated with relatively complex and expensive pumps. For the convenience of replacing empty disposable containers however, at least part of the pump is generally also disposable and must be economical to produce. There is therefore a need for a pump that is reliable and drip free, yet simple and economical to produce.

One disposable dispensing system that uses a pump to dispense a unit dose of liquid from an inverted collapsible container has been described in WO2009/104992. The pump is formed of just two elements, namely a resilient pumping chamber and a regulator, having an inner valve and an outer valve. Operation of the pump occurs by application of a lateral force to the pumping chamber, causing it to partially collapse and expel its contents through the outer valve. Refilling of the pumping chamber occurs through the inner valve once the lateral force is removed. The filling force is provided by the inherent resilience of the wall of the pumping chamber, which must be sufficient to overcome any back-pressure due to a resistance to collapse of the container. Although the pump is extremely effective, the lateral force required to operate the pump can sometimes limit its integration into a dispenser body. Other dispensing systems use an axial force i.e. directed in alignment with the direction in which the fluid is dispensed. It would be desirable to provide a pump that could operate in this manner that could also be integrated into existing axially operating dispensers. Other pumps are shown in JP HI 0 72052 A, WO 2013/035316, ITAMI20130336 A1 and JP HI 0 47400 A.

### SUMMARY

In view of the fluid pumps of the above-mentioned types, one object of the present invention is to provide an alternative pump. The pump may be disposable and is desirably reliable and drip free when used, yet simple, hygienic and economical to produce.

The invention relates in particular to a pump comprising a plastomer spring according to appended claim land further to a pump assembly according to appended claim 13, a method of dispensing a fluid according to appended claim 14 and a dispenser according to appended claim 15. Embodiments are set forth in the appended dependent claims, in the following description and in the drawings.

Thus, there is disclosed a plastomer spring for use in a fluid pump, the spring comprising a first end portion and a second end portion and a plurality of spring sections, joined together in series and aligned with each other in an axial direction to connect the first end portion to the second end portion, which spring sections can be compressed in the axial direction from an initial condition to a compressed condition and can subsequently expand to their initial condition. By providing a plastomer element, operable in an axial direction in this manner, a stable spring may be obtained that does not twist or otherwise distort during compression and may be easily manufactured by injection moulding in a single piece. Unlike metal springs, by the use of polymer materials, the spring may be made compatible with multiple different cleaning, sterilising or skin care fluids, without the risk of corrosion or contamination. The fluid may be soap, detergent, disinfectant, moisturizer or any other form of cleaning, sterilising or skin care product. Furthermore, recycling of the pump may be facilitated, given that other elements of the pump are also of polymer material.

The spring sections may be rhombus shaped, joined together at adjacent corners. In the present context, reference to "rhombus shaped" is not intended to limit the invention to spring sections of the precise geometrical shape having flat sides and sharp corners. The skilled person will understand that the shape is intended to denote an injection mouldable form that will allow resilient collapse, while using the material properties of the plastomer to generate a restoring force. Furthermore, since the resiliency of the structure is at least partially provided by the material at the corner regions, these may be at least partially reinforced, curved, radiused or the like in order to optimise the required spring characteristic. In one preferred embodiment, each spring section comprises four flat leaves joined together along hinge lines that are parallel to each other and perpendicular to the axial direction. In this context, flat is intended to denote planar. The resulting configuration may also be described as concertina like.

The flat leaves may be of constant thickness over their area. The thickness may be between 0.5 mm and 1.5 mm, depending on the material used and the geometrical design of the pump and the spring. For example, a thickness between 0.7 and 1.2 mm has been found to offer excellent collapse characteristics in the case of leaves having a length between hinge lines of around 7 mm. In other words, the ratio of the thickness of the leaf to its length may be around 1:10, but may range from a ratio of 1:5 to a ratio of 1:15. The skilled person will recognise that for a given material, this ratio will be of significance in determining the spring constant of the resulting spring. In one preferred alternative, the leaves may be thicker at their midline and may be thinned or feathered towards their edges. This feathering may be advantageous from a moulding perspective, allowing easier extraction from the mould. It also serves to concentrate the majority of the spring force to the midline. Where the spring is to be located in a cylindrical housing, this is the portion of the spring that provides the majority of the restoring force.

Additionally, as a measure to allow the spring to be installed in a cylindrical housing or pump chamber, the spring sections may have curved edges. The spring may then have a generally circular configuration, as viewed in the axial direction i.e. it may define a cylindrical outline. It will be understood that the curved edges may be sized such that the spring is cylindrical in its unstressed initial condition or in its compressed condition or at an intermediate position between these two extremes, preferably in its compressed condition.

The precise configuration of the spring will depend on the characteristics required in terms of extension and spring constant. An important factor in determining the degree of extension of the spring is the initial geometry of the rhombus shapes of the spring sections. In one preferred embodiment the spring sections, in their initial condition, join at adjacent corners having an internal angle α of between 90 and 120 degrees. In a fully relaxed spring, angle α may be between 60 to 160 or 100 to 130 degrees, depending on the geometries and materials used for the spring as well as the pump body. The angle α is normally slightly higher when the spring is inserted into the pump chamber and in its initial stage before pump compression occurs, e.g. 5-10 degrees higher than for a fully relaxed spring, For a spring in its compressed condition, the angle α increases towards 180 degrees and for example may be 160 to 180 degrees in a compressed condition. For example, the angle α may be 120 degrees for a spring in an initial condition and 160 degrees for a spring in a compressed condition.

A particularly desirable characteristic of the disclosed spring is its ability to undergo a significant reduction in length. Preferably, the spring sections are arranged to compress from an open configuration to a substantially flat configuration in which the spring sections or the leaves lie close against each other i.e. adjacent sides of the rhombus shaped spring sections become co-planar.

In a particular embodiment, each spring section may be able to compress axially to less than 60%, preferably less than 50 % of its uncompressed length. The overall reduction in length will depend on the number of spring sections and in actual operation, there may be neither need nor desire to compress each spring section to the maximum. In a particular embodiment, the spring may comprise at least three spring sections which may preferably be identical in geometry. A most preferred embodiment has five spring section, which offers a good compromise between stability and range of compression.

The skilled person will be aware of various polymer materials that could provide the desired elastic properties required to achieve compression and recovery without excessive hysteresis losses. Thermoplastic polymers that can function like elastomers are generally referred to as plastomers. In the present context, reference to plastomer material is intended to include all thermoplastic elastomers that are elastic at ambient temperature and become plastically deformable at elevated temperatures, such that they can be processed as a melt and be extruded or injection moulded.

The disclosure is primarily directed to the configuration of the spring. Nevertheless, because a plastomer spring can be formed by injection moulding and according to a particularly significant aspect, the spring may be integrally formed with additional elements, e.g. those required for its function as part of a fluid pump. In particular, the first and second end portions may be formed to interact with other components of the pump to maintain the spring in position. In one embodiment, they may form cylindrical or part-cylindrical plugs. The first and second end portions may also be formed with passages or channels to allow fluid to flow along the spring past or through these respective portions.
In one embodiment, the spring may further comprise an integrally formed first valve element. The first valve element may be a circumferential element formed around the first end portion, projecting outwardly and may preferably be formed as one of a circumferential skirt or truncated cone extending towards the second end portion, and a planar disk. The circumferential element may have a diameter that extends beyond the width of the spring sections and may be part spherical.

The spring may further comprise an integrally formed second valve element comprising a circumferential element formed on the second end portion, projecting outwardly and may preferably be formed as one of a planar disk, and a circumferential skirt or truncated cone extending from the second end portion. The second valve element may surround the second end portion or extend axially beyond the second end portion. In one embodiment, the second valve element may be conical or frusto-conical, widening in a direction away from the first end portion. The integration of one or more valve elements with the spring, reduces the number of components that must be manufactured and also simplifies the assembly operations. Given that these components are of the same type of material, their disposal may also be a single operation.

The fluid pump comprises a pump body having an elongate pump chamber surrounding the spring and extending from a pump inlet adjacent to the first end portion to a pump outlet adjacent to the second end portion. As indicated above, the pump chamber may be cylindrical and the spring may also have an exterior profile that is cylindrical in order to match and fit the pump chamber. The spring may have an external cross-sectional shape that corresponds to an internal cross-section of the pump chamber. One preferred form of the pump chamber is cylindrical and the spring may also define a generally cylindrical envelope in this region.

As indicated above, the material for the pump body and/or the spring may be a plastomer. A plastomer may be defined by its properties, such as the Shore hardness, the brittleness temperature and Vicat softening temperature, the flexural modulus, the ultimate tensile strength and the melt index. Depending on, for example, the type of fluid to be dispensed, and the size and geometry of the pump body or spring, the plastomer material used in the pump may be vary from a soft to a hard material. The plastomer material forming at least the spring may thus have a shore hardness of from 50 Shore A (ISO 868, measured at 23 degrees C) to 70 Shore D (ISO 868, measured at 23 degrees C). Optimal results may be obtained using a plastomer material having a shore A hardness of 70-95 or a shore D hardness of 20-50, e.g. a shore A hardness of 75-90. Furthermore, the plastomer material may have brittleness temperature (ASTM D476) being lower than -50 degrees Celsius, e.g. from -90 to -60 degrees C, and a Vicat softening temperature (ISO 306/SA) of 30-90 degrees Celsius, e.g. 40 - 80 degrees C. The plastomers may additionally have a flexural modulus in the range of 15 - 80 MPa, preferably 20 - 40 MPa or 30 - 50 MPa, most preferably 25 - 30 MPa (ASTM D-790), e.g. 26-28 MPa. Likewise, the plastomers preferably have an ultimate tensile strength in the range of 3 - 11 MPa, preferably 5 - 8 MPa (ASTM D-638). Additionally, the melt flow index may be at least 10 dg/min, and more preferably in the range of 20 - 50 dg/min (ISO standard 1133-1, measured at 190 degrees C).

Suitable plastomers include natural and/or synthetic polymers. Particularly suitable plastomers include styrenic block copolymers, polyolefins, elastomeric alloys, thermoplastic polyurethanes, thermoplastic copolyesters and thermoplastic polyamides. In the case of polyolefins, the polyolefin is preferably used as a blend of at least two distinct polyolefins and/or as a co-polymer of at least two distinct monomers. In one embodiment, plastomers from the group of thermoplastic polyolefin blends are used, preferably from the group of polyolefin co-polymers. A preferred group of plastomers is the group of ethylene alpha olefin copolymers. Amongst these, ethylene 1-octene copolymers have been shown to be particularly suitable, especially those having the properties as defined above. Suitable plastomers are available from ExxonMobil Chemical Co. as well as Dow Chemical Co.

It will be understood that the spring may be incorporated into the pump in a number of different ways to assist in the pumping action. According to the invention, the pump chamber is compressible together with the spring in the axial direction. This is achieved by providing the pump chamber with a flexible wall that distorts during compression of the pump chamber. According to the invention, the flexible wall inverts or roll-up as the spring compresses. The overall spring constant of the pump will then be the combined effect of the spring and the pump chamber. The spring may provide support to the pump chamber during its distortion. In this context, support is intended to denote that it prevents the pump chamber from distorting uncontrollably to a position in which it might not be able to restore itself. It may also assist in controlling the distortion to ensure a more constant recovery during the return stroke. It is noted that the pump body or the pump chamber may also provide support to the spring in order to allow it to compress axially in the desired manner.

In order for the spring and pump body to operate effectively together, the first and second end portions may engage with the pump inlet and pump outlet respectively, to retain such engagement during compression of the pump chamber. To this effect, the end portions may be in the form of plugs as described above that closely fit into cylindrical recesses in the inlet and outlet respectively, while allowing passages for fluid to pass by.

According to one embodiment, the spring and the pump body may be injection moulded of the same material. This is especially advantageous from the perspective of recycling and reduces the material streams during manufacture.

Still more advantageously, because of the efficient design discussed above, the whole construction of the fluid pump may be achieved using just two components, namely the pump body and the spring, whereby the pump body and the spring interact to define a one-way inlet valve and a one-way outlet valve. As will be further discussed below, the first valve element may engage against a wall of the pump inlet while the second valve element may engage against a wall of the pump outlet.

Various manufacturing procedures may be used to form the pump including blow moulding, thermoforming, 3D-printing and other methods. Some or all of the elements forming the pump may be manufactured by injection moulding. In a particular embodiment, the pump body and the spring may each be formed by injection moulding. They may both be of the same material or each may be optimised independently using different materials. As discussed above, the material may be optimised for its plastomer qualities and also for its suitability for injection moulding. Additionally, although in one embodiment, the spring is manufactured of a single material, it is not excluded that it may be manufactured of multiple materials.

In the case that the spring is integrally formed to include inlet and outlet valves, the designer is faced with two conflicting requirements, to a large degree depending on the fluid that will be pumped:
1. The valves shall be flexible enough to allow for a good seal;
2. The spring shall be stiff enough to provide the required spring constant to pump the fluid.

The disclosure further relates to a pump assembly comprising the pump assembly comprising a pump as described above, and a pair of sleeves, arranged to slidably interact to guide the pump during a pumping stroke, including a stationary sleeve engaged with the pump inlet and a sliding sleeve engaged with the pump outlet. The stationary sleeve and sliding sleeve may have mutually interacting detent surfaces that prevent their separation and define the pumping stroke. Furthermore, the stationary sleeve may comprise a socket having an axially extending male portion and the pump inlet has an outer diameter, dimensioned to engage within the socket and comprises a boot portion, rolled over on itself to receive the male portion.

Moreover, the disclosure relates to a disposable fluid dispensing package, comprising a pump as described above or a pump assembly as earlier described, sealingly connected to a collapsible product container.

The disclosure also relates to a method of dispensing a fluid from a fluid pump as described above or hereinafter by exerting an axial force on the pump body between the pump inlet and the pump outlet to cause axial compression of the spring and a reduction in volume of the pump chamber.

### BRIEF DESCRIPTION OF THE DRAWINGS

The features and advantages of the present disclosure will be appreciated upon reference to the following drawings of a number of exemplary embodiments, in which:
Figure 1 shows a perspective view of a dispensing system in which the present disclosure as claimed in the appended claims may be implemented;
Figure 2 shows the dispensing system of Figure 1 in an open configuration;
Figure 3 shows a disposable container and pump assembly according to the disclosure in side view;
Figures 4A and 4B show partial cross-sectional views of the pump of Figure 1 in operation;
Figure 5 shows the pump assembly of Figure 3 in exploded perspective view;
Figure 6 shows the spring of Figure 5 in perspective view;
Figure 7 shows the spring of Figure 6 in front view;
Figure 8 shows the spring of Figure 6 in side view;
Figure 9 shows the spring of Figure 6 in top view;
Figure 10 shows the spring of Figure 6 in bottom view;
Figure 11 shows a cross-sectional view through the spring of Figure 8 along line XI-XI;
Figure 12 shows the pump chamber of Figure 5 in front view;
Figure 13 shows a bottom view of the pump body directed onto the pump outlet;
Figure 14 is a longitudinal cross-sectional view of the pump body taken in direction XIV-XIV in Figure 13;
Figures 15-18 are cross-sectional views through the pump assembly of Figure 3 in various stages of operation;
Figure 17A is a detail in perspective of the pump outlet of Figure 17; and
Figure 18A is a detail in perspective of the pump inlet of Figure 18.

### DESCRIPTION OF ILLUSTRATIVE EMBODIMENTS

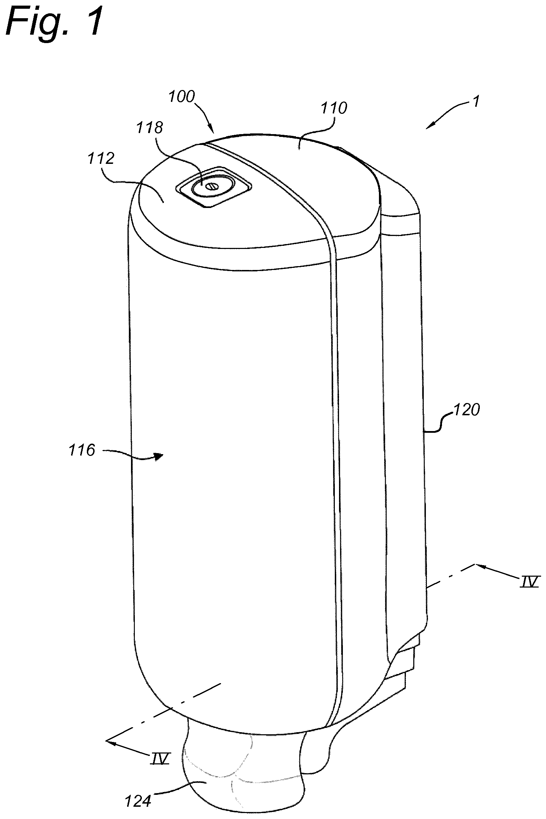

Figure 1 shows a perspective view of a dispensing system 1 in which the present disclosure as claimed in the appended claims may be implemented. The dispensing system 1 comprises a reusable dispenser 100 of the type used in washrooms and the like and available under the name Tork™ from SCA HYGIENE PRODUCTS AB. The dispenser 100 is described in greater detail in WO2011/133085. It will be understood that this embodiment is merely exemplary and that the present invention may also be implemented in other dispensing systems.

The dispenser 100 comprises a rear shell 110 and a front shell 112 that engage together to form a closed housing 116 that can be secured using a lock 118. The housing 116 is affixed to a wall or other surface by a bracket portion 120. At a lower side of the housing 116 is an actuator 124, by which the dispensing system 1 may be manually operated to dispense a dose of cleaning fluid or the like. The operation, as will be further described below, is described in the context of a manual actuator but the invention is equally applicable to automatic actuation e.g. using a motor and sensor.

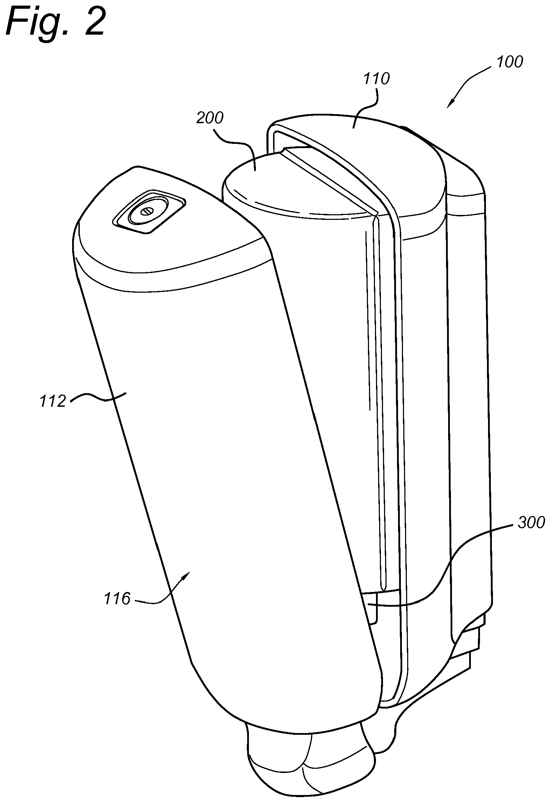

Figure 2 shows in perspective view the dispenser 100 with the housing 116 in the open configuration and with a disposable container 200 and pump assembly 300 contained therein. The container 200 is a 1000 ml collapsible container of the type described in WO2011/133085 and also in WO2009/104992. The container 200 is of generally cylindrical form and is made of polyethylene. The skilled person will understand that other volumes, shapes and materials are equally applicable and that the container 200 may be adapted according to the shape of the dispenser 100 and according to the fluid to be dispensed.

The pump assembly 300 has an outer configuration that corresponds substantially to that described in WO2011/133085. This allows the pump assembly 300 to be used interchangeably with existing dispensers 100. Nevertheless, the interior configuration of the pump assembly 300 is distinct from both the pump of WO2011/133085 and that of WO2009/104992, as will be further described below.

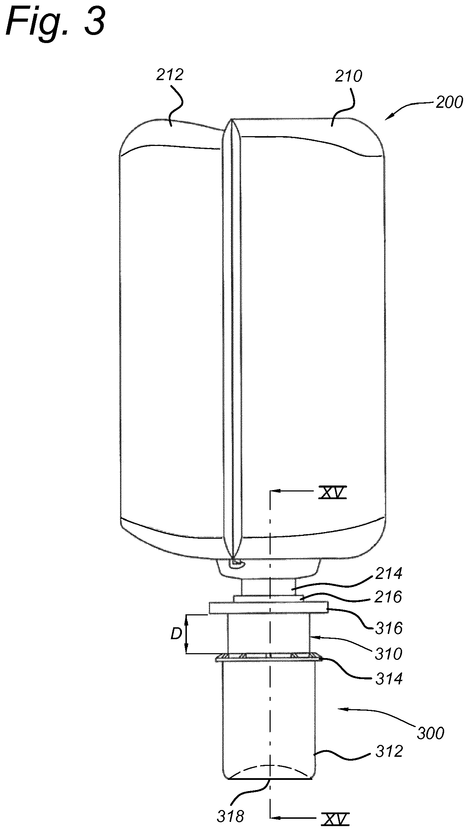

Figure 3, shows the disposable container 200 and pump assembly 300 in side view. As can be seen, the container 200 comprises two portions, namely a hard, rear portion 210 and a soft, front portion 212. Both portions 210, 212 are made of the same material but having different thicknesses. As the container 200 empties, the front portion 210 collapses into the rear portion as liquid is dispensed by the pump assembly 300. This construction avoids the problem with a build-up of vacuum within the container 200. The skilled person will understand that although this is a preferred form of container, other types of reservoir may also be used in the context of the present disclosure, including but not limited to bags, pouches, cylinders and the like, both closed and opened to the atmosphere. The container may be filled with soap, detergent, disinfectant, skin-care liquid, moisturizers or any other appropriate fluid and even medicaments. In most cases, the fluid will be aqueous although the skilled person will understand that other substances may be used where appropriate, including oils, solvents, alcohols and the like. Furthermore, although reference will be made in the following to liquids, the dispenser 1 may also dispense fluids such as dispersions, suspensions or particulates.

At the lower side of the container 200, there is provided a rigid neck 214 provided with a connecting flange 216. The connecting flange 216 engages with a stationary sleeve 310 of the pump assembly 300. The pump assembly 300 also includes a sliding sleeve 312, which terminates at an orifice 318. The sliding sleeve 312 carries an actuating flange 314 and the stationary sleeve has a locating flange 316. Both the sleeves 310, 312 are injection moulded of polycarbonate although the skilled person will be well aware that other relatively rigid, mouldable materials may be used. In use, as will be described in further detail below, the sliding sleeve 312 is displaceable by a distance D with respect to the stationary sleeve 310 in order to perform a single pumping action.

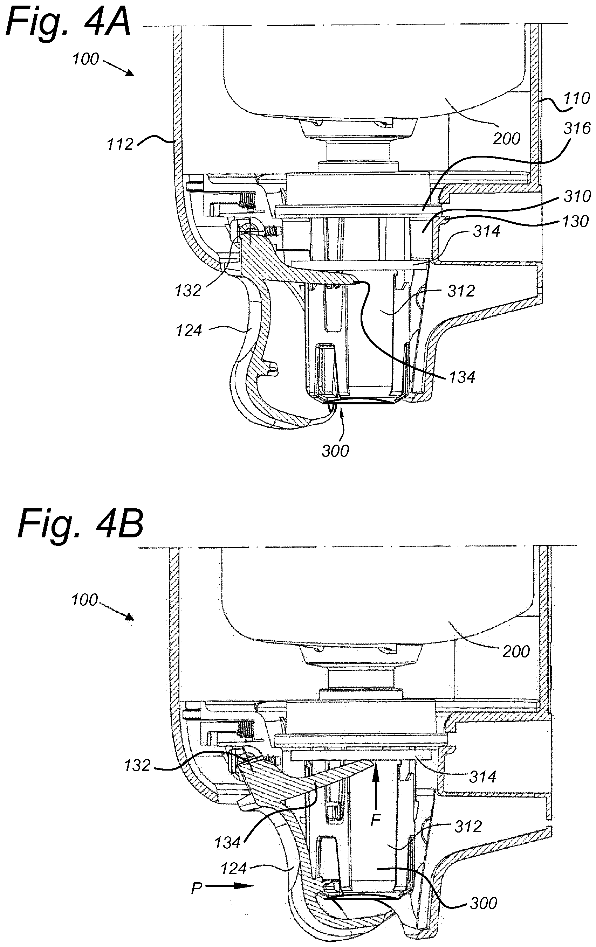

Figures 4A and 4B show partial cross-sectional views through the dispenser 100 of Figure 1, illustrating the pump assembly 300 in operation. According to Figure 4A, the locating flange 316 is engaged by a locating groove 130 on the rear shell 110. The actuator 124 is pivoted at pivot 132 to the front shell 112 and includes an engagement portion 134 that engages beneath the actuating flange 314.

Figure 4B shows the position of the pump assembly 300 once a user has exerted a force P on actuator 124. In this view, the actuator 124 has rotated anti-clockwise about the pivot 132, causing the engagement portion 134 to act against the actuating flange 314 with a force F, causing it to move upwards. Thus far, the dispensing system 1 and its operation is essentially the same as that of the existing system known from WO2011/133085.

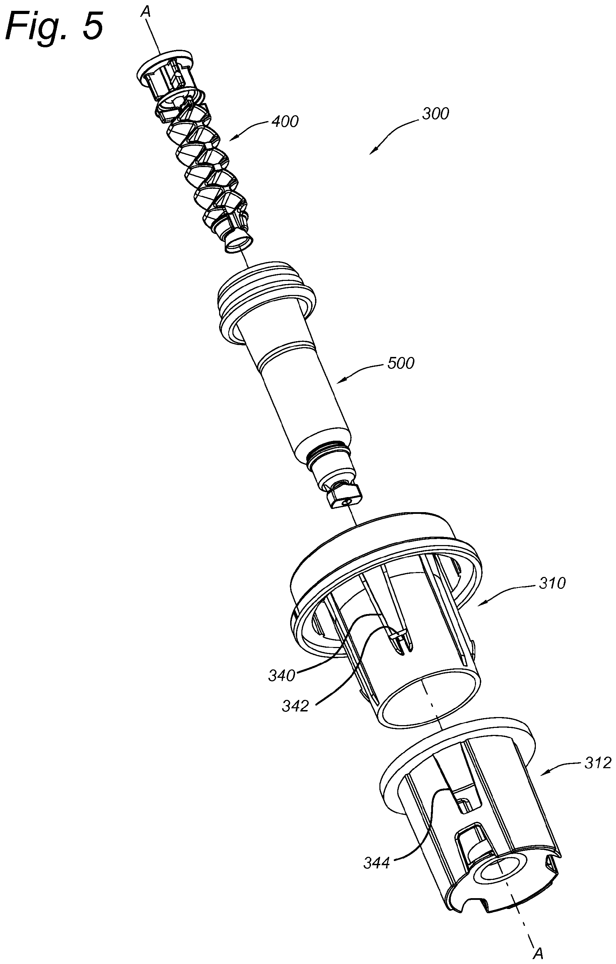

Figure 5 shows the pump assembly 300 of Figure 3 in exploded perspective view illustrating the stationary sleeve 310, the sliding sleeve 312, spring 400 and pump body 500 axially aligned along axis A. The stationary sleeve 310 is provided on its outer surface with three axially extending guides 340, each having a detent surface 342. The sliding sleeve 312 is provided with three axially extending slots 344 through its outer surface, the functions of which will be described further below.

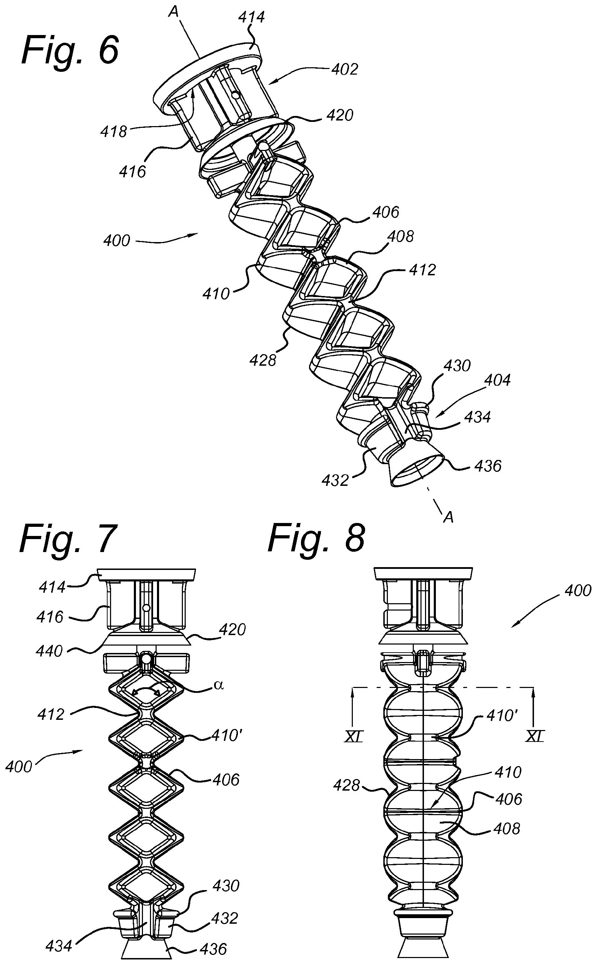

Figure 6 shows an enlarged perspective view of the spring 400, which is injection moulded in a single piece from ethylene octene material from ExxonMobil Chemical Co. Spring 400 comprises a first end portion 402 and a second end portion 404 aligned with each other along the axis A and joined together by a plurality of rhombus shaped spring sections 406. In this embodiment, five spring sections 406 are shown although the skilled person will understand that more or less such sections may be present according to the spring constant required. Each spring section 406 comprises four flat leaves 408, joined together along hinge lines 410 that are parallel to each other and perpendicular to the axis A. The leaves 408 have curved edges 428 and the spring sections 406 join at adjacent corners 412 .

The first end portion 402 includes a ring element 414 and a cross-shaped support element 416. An opening 418 is formed through the ring element 414. The cross-shaped support element 416 is interrupted intermediate its ends by an integrally formed first valve element 420 that surrounds the first end portion 402 at this point.

The second end portion 404 has a rib 430 and a frusto-conical shaped body 432 that narrows in a direction away from the first end portion 402. On its exterior surface the frusto-conical shaped body 432 is formed with two diametrically opposed flow passages 434. At its extremity it is provided with an integrally formed second valve element 436 projecting conically outwardly and extending away from the first end portion.

Figures 7-10 are respective front, side and first and second end elevations of the spring 400.

Starting with Figure 7, the ring element 414 and cross-shaped support element 416 can be seen, together with the first valve element 420. In this view it may be noted that the first valve element 420 is part spherical in shape and extends to an outer edge 440 that is slightly wider than the cross-shaped support element 416. Also in this view, the rhombus shape of the spring sections 406 can be clearly seen. The spring 400 is depicted in its unstressed condition and the corners 412 define an internal angle α of around 115°. The skilled person will recognise that this angle may be adjusted to modify the spring properties and may vary from 60 to 160 degrees, preferably from 100 to 130 degrees and more preferably between 90 and 120 degrees. Also visible is the frusto-conical shaped body 432 of the second end portion 404 with rib 430, flow passages 434 and second valve element 436.

Figure 8 depicts the spring 400 in side view, viewed in the plane of the rhombus-shape of the spring sections 406. In this view, the hinge lines 410 can be seen, as can be the curved edges 428. It will be noted that the hinge lines 410' at the corners 412, where adjacent spring sections 406 join, are significantly longer than the hinge lines 410 where adjacent flat leaves 408 join.

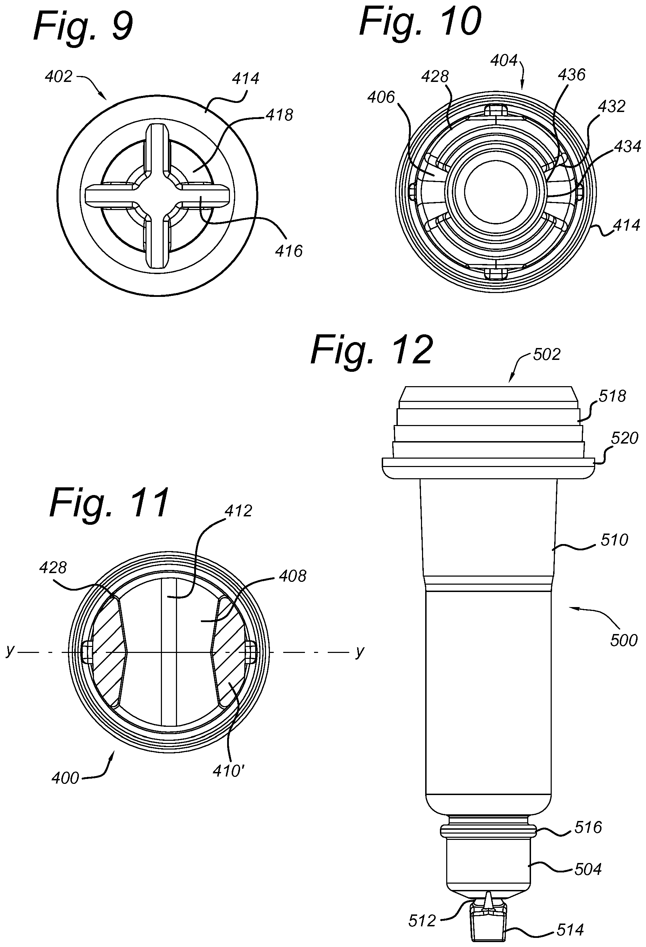

Figure 9 is a view onto the first end portion 402 showing the ring element 414 with the cross-shaped support element 416 viewed through opening 418. Figure 10 shows the spring 400 viewed from the opposite end to Figure 9, with the second valve element 436 at the centre and the frusto-conical shaped body 432 of the second end portion 404 behind it, interrupted by flow passages 434. Behind the second end portion 404, the curved edges 428 of the adjacent spring section 406 can be seen, which in this view define a substantially circular shape. In the shown embodiment, the ring element 414 is the widest portion of the spring 400.

Figure 11, is a cross-sectional view along line XI-XI in Figure 8 showing the variation in thickness through the flat leaves 408 at the hinge line 410'. As can be seen, each leaf 408 is thickest at its mid-line at location Y-Y and is feathered towards the curved edges 428, which are thinner. This tapering shape concentrates the material strength of the spring towards the mid-line and the force about the mid-line and concentrates the force about the axis A.

Figure 12 shows the pump body 500 of Figure 5 in front elevation in greater detail. In this embodiment, pump body 500 is also manufactured of the same plastomer material as the spring 400. This is advantageous both in the context of manufacturing and disposal, although the skilled person will understand that different materials may be used for the respective parts. Pump body 500 comprises a pump chamber 510, which extends from a pump inlet 502 to a pump outlet 504. The pump outlet 504 is of a smaller diameter than the pump chamber 510 and terminates in a nozzle 512, which is initially closed by a twist-off closure 514. Set back from the nozzle 512 is an annular protrusion 516. The pump inlet 502 comprises a boot portion 518 that is rolled over on itself and terminates in a thickened rim 520.

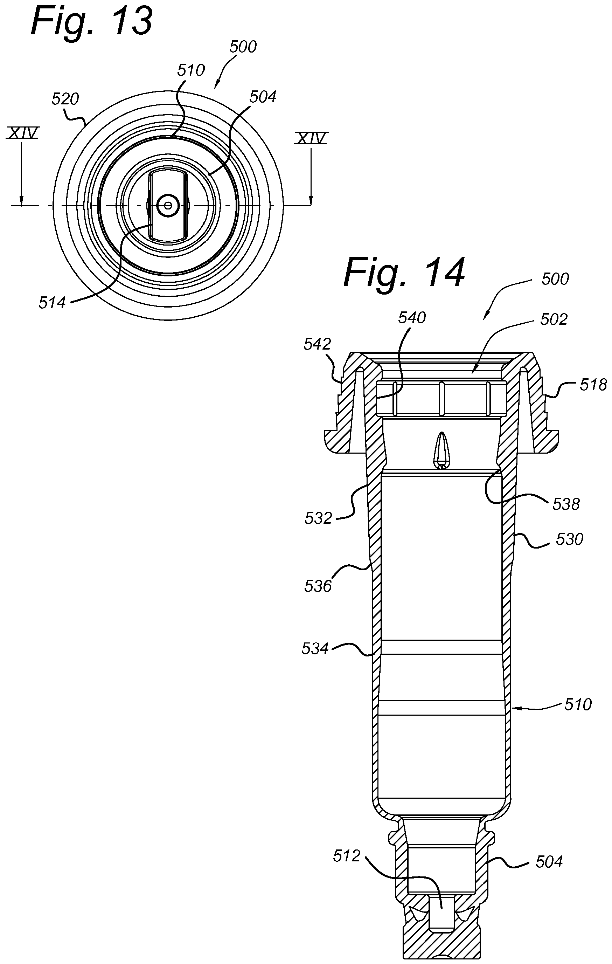

Figure 13 shows an end view of the pump body 500 directed onto the pump outlet 504. The pump body 500 is rotationally symmetrical, with the exception of the twist-off closure 514, which is rectangular. The variation in diameter between the pump outlet 504, the pump chamber 510 and the thickened rim 520 can be seen.

Figure 14 is a longitudinal cross-sectional view of the pump body 500 taken in direction XIV-XIV in Figure 13. The pump chamber 510 comprises a flexible wall 530, having a thick-walled section 532 adjacent to the pump inlet 502 and a thin-walled section 534 adjacent to the pump outlet 504. The thin-walled section 534 and the thick-walled section 532 join at a transition 536. The thin-walled section 534 tapers in thickness from the transition 536 with a decreasing wall thickness towards the pump outlet 504. The thick-walled section 532 tapers in thickness from the transition 536 with an increasing wall thickness towards the pump inlet 502. The thick-walled section 532 also includes an inlet valve seat 538 at which the internal diameter of the pump chamber 510 reduces as it transitions to the pump inlet 502. In addition to the variations in wall thickness of the pump chamber 510, there is also provided an annular groove 540 within the pump body 500 at the pump inlet 502 and sealing ridges 542 on an exterior surface of the boot portion 518.

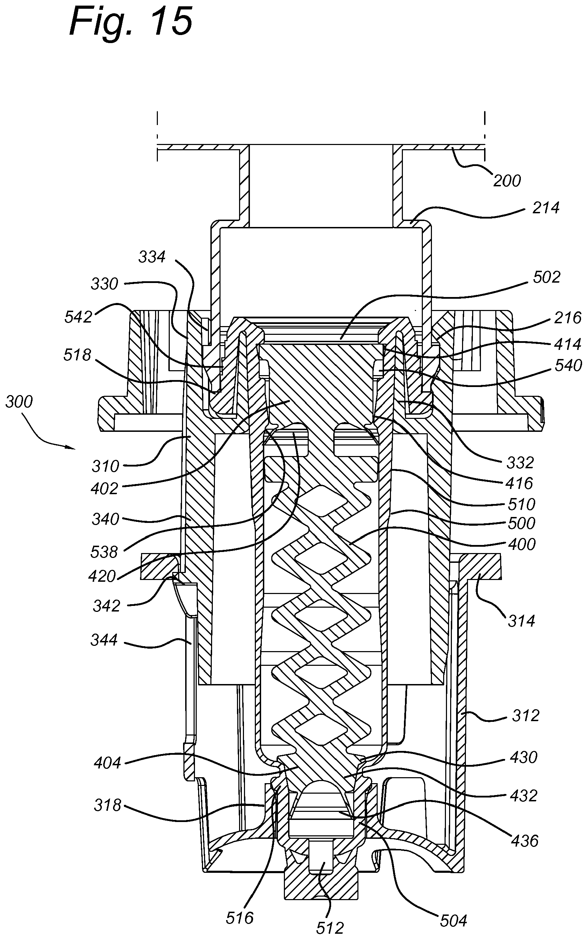

Figure 15 is a cross-sectional view through the pump assembly 300 of Figure 3, showing the spring 400, the pump body 500 and the sleeves 310, 312, connected together in a position prior to use. Stationary sleeve 310 includes a socket 330 opening towards its upper side. The socket 330 has an upwardly extending male portion 332 sized to engage within the boot portion 518 of the pump body 500. The socket 330 also includes inwardly directed cams 334 on its inner surface of a size to engage with the connecting flange 216 on the rigid neck 214 of container 200 in a snap connection. The engagement of these three portions results in a fluid tight seal, due to the flexible nature of the material of the pump body 500 being gripped between the relatively more rigid material of the connecting flange 216 and the stationary sleeve 310. Additionally, the sealing ridges 542 on the exterior surface of the boot portion 518 engage within the rigid neck 214 in the manner of a stopper. In the depicted embodiment, this connection is a permanent connection but it will be understood that other e.g. releasable connections may be provided between the pump assembly 300 and the container 200.

Figure 15 also depicts the engagement between the spring 400 and the pump body 500. The inlet portion 402 of the spring 400 is sized to fit within the pump inlet 502 with the ring element 414 engaged in the groove 540 and the cross-shaped support element 416 engaging against the interior surface of the pump inlet 502 and the adjacent pump chamber 510. The first valve element 420 rests against the inlet valve seat 538 with a slight pre-load, sufficient to maintain a fluid-tight seal in the absence of any external pressure.

At the other end of the pump body 500, the outlet portion 404 engages within the pump outlet 504. The rib 430 has a greater diameter than the pump outlet 504 and serves to position the frusto-conical shaped body 432 and the second valve element 436 within the pump outlet 504. The outside of the pump outlet 504 also engages within the orifice 318 of the sliding sleeve 312 with the nozzle 512 slightly protruding. The annular protrusion 516 is sized to be slightly larger than the orifice 318 and maintains the pump outlet 504 at the correct position within the orifice 318. The second valve element 436 has an outer diameter that is slightly larger than the inner diameter of the pump outlet 504, whereby a slight pre-load is also applied, sufficient to maintain a fluid-tight seal in the absence of any external pressure.

Figure 15 also shows how the sleeves 310, 312 engage together in operation. The sliding sleeve 312 is slightly larger in diameter than the stationary sleeve 310 and encircles it. The three axial guides 340 on the outer surface of the stationary sleeve 310 engage within respective slots 344 in the sliding sleeve. In the position shown in Figure 15, the spring 400 is in its initial condition being subject to a slight pre-compression and the detent surfaces 342 engage against the actuating flange 314.

In the position shown in Figure 15, the container 200 and pump assembly 300 are permanently connected together and are supplied and disposed of as a single disposable unit. The snap connection between socket 330 and the connecting flange 216 on the container 200 prevents the stationary sleeve 310 from being separated from the container 200. The detent surfaces 342 prevent the sliding sleeve 312 from being removed from its position around the stationary sleeve 310 and the pump body 500 and spring 400 are retained within the sleeves 310, 312.

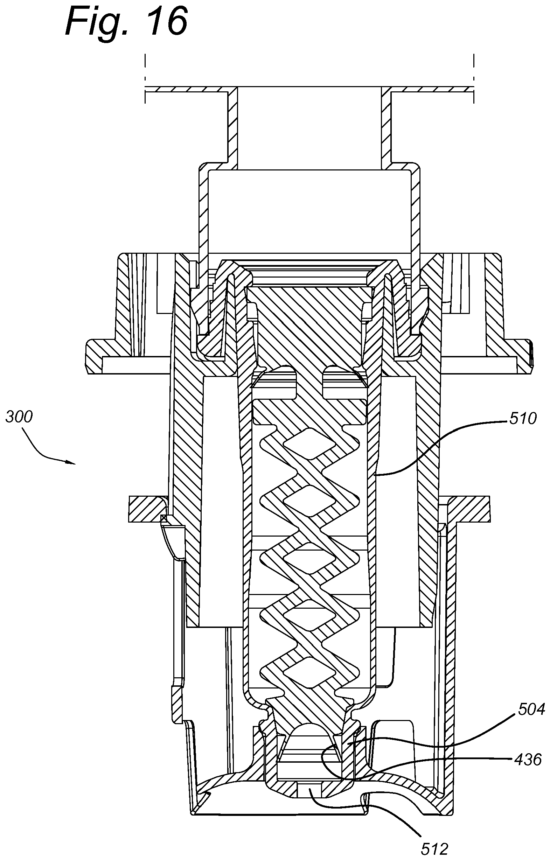

Figure 16 shows a similar view to Figure 15 with the twist-off closure 514 removed. The pump assembly 300 is now ready for use and may be installed into a dispenser 100 as shown in Figure 2. For the sake of the following description, the pump chamber 510 is full of fluid to be dispensed although it will be understood that on first opening of the twist-off closure 514, the pump chamber 510 may be full of air. In this condition, the second valve element 436 seals against the inner diameter of the pump outlet 504, preventing any fluid from exiting through the nozzle 512.

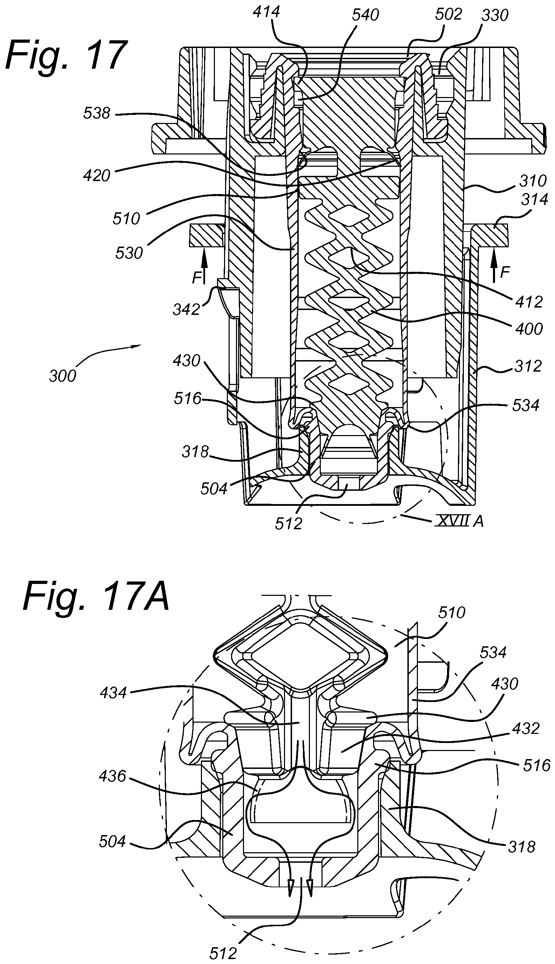

Figure 17 shows the pump assembly 300 of Figure 16 as actuation of a dispensing stroke is commenced, corresponding to the action described in relation to Figures 4A and 4B. As previously described in relation to those figures, engagement of actuator 124 by a user causes the engagement portion 134 to act against the actuating flange 314 exerting a force F. In this view, the container 200 has been omitted for the sake of clarity.

The force F causes the actuating flange 314 to move out of engagement with the detent surfaces 342 and the sliding sleeve 312 to move upwards with respect to the stationary sleeve 310. This force is also transmitted by the orifice 318 and the annular protrusion 516 to the pump outlet 504, causing this to move upwards together with the sliding sleeve 312. The other end of the pump body 400 is prevented from moving upwards by engagement of the pump inlet 502 with the socket 330 of the stationary sleeve 310.

The movement of the sliding sleeve 312 with respect to the stationary sleeve 310 causes an axial force to be applied to the pump body 400. This force is transmitted through the flexible wall 530 of the pump chamber 510, which initially starts to collapse at its weakest point, namely the thin walled section 534 adjacent to the pump outlet 504. As the pump chamber 510 collapses, its volume is reduced and fluid is ejected through the nozzle 512. Reverse flow of fluid through the pump inlet 502 is prevented by the first valve element 420, which is pressed against the inlet valve seat 538 by the additional fluid pressure within the pump chamber 510.

Additionally, the force is transmitted through the spring 400 by virtue of the engagement between the rib 430 and the pump outlet 504 and the ring element 414 being engaged in the groove 540 at the pump inlet 502. This causes the spring 400 to compress, whereby the internal angle α at the corners 412 increases.

Figure 17A is a detail in perspective of the pump outlet 504 of Figure 17, showing in greater detail how second valve element 436 operates. In this view, spring 400 is shown unsectioned. As can be seen, thin walled section 534 has collapsed by partially inverting on itself adjacent to the annular protrusion 516. Below the annular protrusion 516, the pump outlet 504 has a relatively thicker wall and is supported within the orifice 318, maintaining its form and preventing distortion or collapse. As can also be seen in this view, rib 430 is interrupted at flow passage 434, which extends along the outer surface of the frusto-conical shaped body 432 to the second valve element 436. This flow passage 434 allows fluid to pass from the pump chamber 510 to engage with the second valve element 436 and exert a pressure onto it. The pressure causes the material of the second valve element 436 to flex away from engagement with the inner wall of the pump outlet 504, whereby fluid can pass the second valve element 436 and reach the nozzle 512. The precise manner in which the second valve element 436 collapses, will depend upon the degree and speed of application of the force F and other factors such as the nature of the fluid, the pre-load on the second valve element 436 and its material and dimensions. These may be optimised as required.

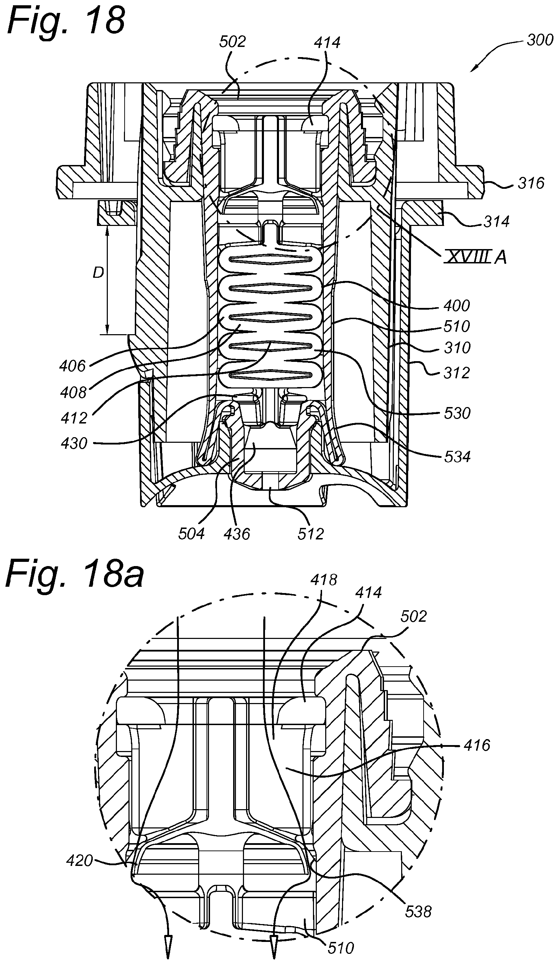

Figure 18 shows the pump assembly 300 of Figure 17 in fully compressed state on completion of an actuation stroke. The sliding sleeve 312 has moved upwards a distance D with respect to the initial position of Figure 16 and the actuating flange 314 has entered into abutment with the locating flange 316. In this position, pump chamber 310 has collapsed to its maximum extent whereby the thin walled section 534 has fully inverted. The spring 400 has also collapsed to its maximum extent with all of the rhombus-shaped spring section 406 fully collapsed to a substantially flat configuration in which the leaves 408 lie close against each other and, in fact all of the leaves 408 are almost parallel to each other. It will be noted that although reference is given to fully compressed and collapsed conditions, this need not be the case and operation of the pump assembly 300 may take place over just a portion of the full range of movement of the respective components.

As a result of the spring sections 406 collapsing, the internal angle α at the corners 412 approaches 180° and the overall diameter of the spring 400 at this point increases. As illustrated in figure 18, the spring 400, which was initially slightly spaced from the flexible wall 530, engages into contact with the pump chamber. At least in the region of the thin walled section 534, the spring sections 406 exert a force on the flexible wall 530, causing it to stretch.

Once the pump has reached the position of Figure 18, no further compression of the spring 400 takes place and fluid ceases to flow through the nozzle 512. The second valve element 436 closes again into sealing engagement with the pump outlet 504. In the illustrated embodiment, the stroke, defined by distance D is around 14 mm and the volume of fluid dispensed is about 1.1 ml. It will be understood that these distances and volumes can be adjusted according to requirements.

After the user releases the actuator 124 or the force F is otherwise discontinued, the compressed spring 400 will exert a net restoring force on the pump body 500. The spring depicted in the present embodiment exerts an axial force of 20N in its fully compressed condition. This force, acts between the ring element 414 and the rib 430 and exerts a restoring force between the pump inlet 502 and the pump outlet 504 to cause the pump chamber 510 to revert to its original condition. The pump body 500 by its engagement with the sleeves 310, 312 also causes these elements to return towards their initial position as shown in Figure 16.

As the spring 400 expands, the pump chamber 510 also increases in volume leading to an under pressure within the fluid contained within the pump chamber 510. The second valve element 436 is closed and any under pressure causes the second valve element 436 to engage more securely against the inner surface of the pump outlet 504.

Figure 18A shows a perspective detail of part of the pump inlet 502 of Figure 18. At the pump inlet 502, the first valve element 420 can flex away from the inlet valve seat 538 due to the lower pressure in the pump chamber 510 compared to that in the container 200. This causes fluid to flow into the pump chamber 510 through the rigid neck 214 of the container 200 and the opening 418 formed through the ring element 414 and over the cross-shaped support element 416.

As the skilled person appreciates, the spring may provide a major restoring force during the return stroke. However, as the spring 400 extends, its force may also be partially augmented by radial pressure acting on it from the flexible wall 530 of the pump chamber 510. The pump chamber 510 may also exert its own restoring force on the sliding sleeve 312 due to the inversion of the thin walled section 534, which attempts to revert to its original shape. Neither the restoring force of the spring 400 nor that of the pump chamber 510 is linear but the two may be adapted together to provide a desirable spring characteristic. In particular, the pump chamber 510 may exert a relatively strong restoring force at the position depicted in Figure 17, at which the flexible wall 530 just starts to invert. The spring 400 may exert its maximum restoring force when it is fully compressed in the position according to Figure 18.

The spring 400 of Figures 6 to 11 and pump body 500 of Figures 12 to 14 are dimensioned for pumping a volume of around 1-2 ml, e.g. around 1.1 ml. In a pump dimensioned for 1.1 ml, the flat leaves 408 have a length of around 7 mm, measured as the distance between hinge lines 410 about which they flex. They have a thickness at their mid-lines of around 1 mm. The overall length of the spring is around 58 mm. The pump body 400 has an overall length of around 70 mm, with the pump chamber 510 comprising around 40 mm and having an internal diameter of around 15 mm and a minimal wall thickness of around 0.5 mm. The skilled person will understand that these dimensions are exemplary.

The pump/spring may develop a maximum resistance of between 1 N and 50 N, more specifically between 20 N and 25 N on compression. Furthermore, the pump/spring bias on the reverse stroke for an empty pump may be between 1 N and 50 N, preferably between 1 N and 30 N more preferably between 5 N and 20 N, most preferably between 10 N and 15 N. In general, the compression and bias forces may depend on and be proportional to the intended volume of the pump. The values given above may be appropriate for a 1 ml pump stroke.

Thus, the present disclosure has been described by reference to the embodiments discussed above. It will be recognized that these embodiments are susceptible to various modifications and alternative forms well known to those of skill in the art without departing from the scope of the invention as defined by the appended claims.

## Claims

1. A fluid pump comprising:
a plastomer spring (400), the spring comprising a first end portion (402) and a second end portion (404) and a plurality of spring sections (406), joined together in series at adjacent corners and aligned with each other in an axial direction to connect the first end portion to the second end portion, which spring sections can be compressed in the axial direction from an initial condition to a compressed condition and can subsequently expand to their initial condition; and
a pump body (500) having an elongate pump chamber (510) surrounding the spring and extending from a pump inlet (502) adjacent to the first end portion to a pump outlet (504) adjacent to the second end portion, wherein the pump chamber is compressible together with the spring in the axial direction **characterised in that**, the pump chamber (510) comprises a flexible wall (530) that inverts during compression of the pump chamber.

2. Pump according to claim 1, wherein each spring section comprises four flat leaves (408) joined together along hinge lines (410) that are parallel to each other and perpendicular to the axial direction and wherein the leaves are preferably feathered from a relatively thicker mid-line to relatively thinner edges.

3. Pump according to any preceding claim, wherein the spring sections have curved edges (428) such that the spring has a generally circular configuration, as viewed in the axial direction.

4. Pump according to any preceding claim, wherein in their initial condition the spring sections join at adjacent corners (412) having an internal angle of between 60 to 160 degrees.

5. Pump according to any preceding claim, wherein the spring sections are arranged to compress from an open configuration to a substantially flat configuration and wherein each spring section can compress axially to less than 60%, preferably less than 50 % of its uncompressed length.

6. Pump according to any preceding claim, comprising at least three, preferably identical, spring sections.

7. Pump according to any preceding claim, wherein the spring comprises a material, preferably an ethylene alpha olefin copolymer, more preferably ethylene octane, having one or more of:
- a flexural modulus in the range of 15 - 80 MPa, preferably 20 - 40 MPa, most preferably 25 - 30 MPa (ASTM D-790), e.g. 26-28 MPa;
- an ultimate tensile strength in the range of 3 - 11 MPa, preferably 5 - 8 MPa (ASTM D-638); and
- a melt flow index of at least 10 dg/min, more preferably in the range of 20 - 50 dg/min (ISO standard 1133-1).

8. Pump according to any preceding claim, wherein the spring further comprises an integrally formed first valve element (420), preferably formed as a circumferential element projecting outwardly, which may be formed as one of a circumferential skirt or truncated cone extending towards the second end portion, and a planar disk.

9. Pump according to claim 8, wherein the spring further comprises an integrally formed second valve element (436) formed as a circumferential element projecting outwardly, preferably formed as one of a planar disk, and a circumferential skirt or truncated cone extending from the second end portion.

10. Pump according to any preceding claim, wherein the first and second end portions engage with the pump inlet and pump outlet respectively, to retain such engagement during compression of the pump chamber.

11. Pump according to any preceding claim, wherein the pump body and the spring are injection moulded of the same or different material.

12. Pump according to any preceding claim, consisting of only two components, namely the pump body and the spring, whereby the pump body and the spring interact to define a one-way inlet valve and a one-way outlet valve.

13. A pump assembly (300) comprising the pump according to any preceding claim, and a pair of sleeves, arranged to slidably interact to guide the pump during a pumping stroke, including a stationary sleeve (310) engaged with the pump inlet and a sliding sleeve (312) engaged with the pump outlet.

14. A method of dispensing a fluid from a pump according to any of claims 1 to 12, the method comprising exerting an axial force on the pump body between the pump inlet and the pump outlet to cause axial compression of the spring and a reduction in volume of the pump chamber.

15. A dispenser configured to carry out the method according to claim 14 on a disposable fluid dispensing package comprising a pump assembly according to claim 13, sealingly connected to a collapsible product container (200).

## Patentansprüche

1. Fluidpumpe, umfassend:
eine Plastomerfeder (400), wobei die Feder einen ersten Endteil (402) und einen zweiten Endteil (404) und eine Vielzahl an Federabschnitten (406) umfasst, die in Reihe an benachbarten Ecken zusammengefügt sind und miteinander in einer axialen Richtung ausgerichtet sind, um den ersten Endteil mit dem zweiten Endteil zu verbinden, welche Federabschnitte in der axialen Richtung von einem anfänglichen Zustand zu einem komprimierten Zustand komprimiert werden können, und anschließend zu ihrem anfänglichen Zustand expandieren können; und
einen Pumpenkörper (500) mit einer länglichen Pumpenkammer (510), die die Feder umgibt und die sich von einem Pumpeneinlass (502) benachbart zum ersten Endteil zu einem Pumpenauslass (504) benachbart zum zweiten Endteil erstreckt,
wobei die Pumpenkammer zusammen mit der Feder in der axialen Richtung komprimierbar ist,
**dadurch gekennzeichnet, dass** die Pumpenkammer (510) eine flexible Wand (530) umfasst, die während der Kompression der Pumpenkammer invertiert.

2. Pumpe nach Anspruch 1, wobei jeder Federabschnitt vier flache Blätter (408) umfasst, die entlang Gelenklinien (410) zusammengefügt sind, die parallel zueinander und rechtwinklig zur axialen Richtung sind, und wobei die Blätter bevorzugt von einer relativ dickeren Mittellinie zu relativ dünneren Rändern sich verjüngen.

3. Pumpe nach einem beliebigen voranstehenden Anspruch, wobei die Federabschnitte gebogene Ränder (428) aufweisen, so dass die Feder eine allgemein kreisförmige Konfiguration aufweist, wie in der axialen Richtung gesehen.

4. Pumpe nach einem beliebigen voranstehenden Anspruch, wobei sich die Federabschnitte in ihrem anfänglichen Zustand an benachbarten Ecken (412) mit einem Innenwinkel von zwischen 60 bis 160 Grad zusammenfügen.

5. Pumpe nach einem beliebigen voranstehenden Anspruch, wobei die Federabschnitte angeordnet sind, von einer offenen Konfiguration zu einer im Wesentlichen flachen Konfiguration zu komprimieren, und wobei jeder Federabschnitt axial auf weniger als 60%, bevorzugt weniger als 50% seiner unkomprimierten Länge komprimieren kann.

6. Pumpe nach einem beliebigen voranstehenden Anspruch, die mindestens drei, bevorzugt identische, Federabschnitte umfasst.

7. Pumpe nach einem beliebigen voranstehenden Anspruch, wobei die Feder ein Material umfasst, bevorzugt ein Ethylen-alpha-Olefin-Copolymer, stärker bevorzugt Ethylenoctan, mit einem oder mehreren von:
- einem Biegemodul im Bereich von 15-80 MPa, bevorzugt 20-40 MPa, am stärksten bevorzugt 25-30 MPa (ASTM D-790), z.B. 26-28 MPa;
- einer Zugfestigkeit im Bereich von 3-11 MPa, bevorzugt 5-8 MPa (ASTM D-638); und
- einem Schmelzflussindex von mindestens 10 dg/min, stärker bevorzugt im Bereich von 20-50 dg/min (ISO-Standard 1133-1).

8. Pumpe nach einem beliebigen voranstehenden Anspruch, wobei die Feder des Weiteren ein integral ausgebildetes erstes Ventilelement (420) umfasst, bevorzugt als ein umlaufendes, auswärts vorstehendes Element ausgebildet, das als eines von einem umlaufenden Rand oder einem trunkierten Kegel, die sich auf den zweiten Endteil zu erstrecken, und einer planaren Scheibe ausgebildet sein kann.

9. Pumpe nach Anspruch 8, wobei die Feder des Weiteren ein integral ausgebildetes zweites Ventilelement (436) umfasst, das als ein umlaufendes, auswärts vorstehendes Element ausgebildet ist, bevorzugt ausgeformt als eines von einer planaren Scheibe und einem umlaufenden Rand oder einem trunkierten Kegel, die sich vom zweiten Endteil erstrecken.

10. Pumpe nach einem beliebigen voranstehenden Anspruch, wobei die ersten und zweiten Endteile mit dem Pumpeneinlass beziehungsweise Pumpenauslass ineinandergreifen, um solches Ineinandergreifen während einer Kompression der Pumpenkammer beizubehalten.

11. Pumpe nach einem beliebigen voranstehenden Anspruch, wobei der Pumpenkörper und die Feder aus dem gleichen oder verschiedenem Material durch Spritzgießen geformt werden.

12. Pumpe nach einem beliebigen voranstehenden Anspruch, die aus nur zwei Bestandteilen besteht, nämlich dem Pumpenkörper und der Feder, wobei der Pumpenkörper und die Feder wechselwirken, um ein Einweg-Einlassventil und ein Einweg-Auslassventil zu definieren.

13. Pumpenanordnung (300), die die Pumpe gemäß einem beliebigen voranstehenden Anspruch und ein Paar Hülsen umfasst, die angeordnet sind, verschiebbar zu wechselwirken, um die Pumpe während eines Pumpenhubs zu führen, einschließlich einer stationären Hülle (310), die mit dem Pumpeneinlass ineinandergreift und einer verschiebbaren Hülle (312), die mit dem Pumpenauslass ineinandergreift.

14. Verfahren zum Abgeben eines Fluids aus einer Pumpe gemäß einem beliebigen der Ansprüche 1 bis 12, wobei das Verfahren Ausüben einer axialen Kraft auf den Pumpenkörper zwischen dem Pumpeneinlass und dem Pumpenauslass umfasst, um eine axiale Kompression der Feder und eine Verringerung im Volumen der Pumpenkammer zu verursachen.

15. Abgabevorrichtung, die konfiguriert ist, das Verfahren gemäß Anspruch 14 an einer fluidabgebenden Einwegverpackung auszuführen, umfassend eine Pumpenanordnung gemäß Anspruch 13, abdichtend verbunden mit einem zusammenlegbaren Produktbehälter (200).

## Revendications

1. Pompe à fluide comprenant :
un ressort en plastomère (400), le ressort comprenant une première partie d'extrémité (402) et une seconde partie d'extrémité (404) et une pluralité de sections de ressort (406), assemblées en série aux coins adjacents et alignées les unes par rapport aux autres dans une direction axiale pour raccorder la première partie d'extrémité à la seconde partie d'extrémité, lesquelles sections de ressort peuvent être comprimées dans la direction axiale d'une condition initiale à une condition comprimée et peuvent ensuite subir une expansion jusqu'à leur condition initiale ; et
un corps de pompe (500) ayant une chambre de pompe allongée (510) entourant le ressort et s'étendant à partir d'une entrée de pompe (502) adjacente à la première partie d'extrémité jusqu'à une sortie de pompe (504) adjacente à la seconde partie d'extrémité, dans laquelle la chambre de pompe est compressible conjointement avec le ressort dans la direction axiale, **caractérisée en ce que** la chambre de pompe (510) comprend une paroi flexible (530) qui s'inverse durant la compression de la chambre de pompe.

2. Pompe selon la revendication 1, dans laquelle chaque section de ressort comprend quatre lames plates (408) assemblées le long de lignes de charnière (410) qui sont parallèles entre elles et perpendiculaires à la direction axiale et dans laquelle les lames sont de préférence amincies progressivement d'une ligne centrale relativement plus épaisse jusqu'aux bords relativement plus fins.

3. Pompe selon l'une quelconque des revendications précédentes, dans laquelle les sections de ressort ont des bords incurvés (428) de sorte que le ressort a une configuration généralement circulaire, comme observé dans la direction axiale.

4. Pompe selon l'une quelconque des revendications précédentes, dans laquelle dans leur condition initiale, les sections de ressort s'assemblent au niveau des coins (412) adjacents ayant un angle interne compris entre 60 et 160 degrés.

5. Pompe selon l'une quelconque des revendications précédentes, dans laquelle les sections de ressort sont agencées pour se comprimer d'une configuration ouverte à une configuration sensiblement plate et dans laquelle chaque section de ressort peut se comprimer axialement à moins de 60%, de préférence moins de 50% de sa longueur non comprimée.

6. Pompe selon l'une quelconque des revendications précédentes, comprenant au moins trois sections de ressort, de préférence identiques.

7. Pompe selon l'une quelconque des revendications précédentes, dans laquelle le ressort comprend un matériau, de préférence un copolymère d'éthylène - alpha oléfine, encore de préférence d'éthylène - octane, ayant un ou plusieurs éléments parmi :
un module de flexion dans la plage de 15 à 80 MPa, de préférence de 20 à 40 MPa, de manière préférée entre toutes de 25 à 30 MPa (ASTM D-790), par exemple 26 à 28 MPa ;
une résistance à la tension ultime dans la plage de 3 à 11 MPa, de préférence 5 à 8 MPa (ASTM D-638) ; et
un indice de fluidité d'au moins 10 dg/min, encore de préférence dans la plage de 20 à 50 dg/min (norme ISO 1133-1).

8. Pompe selon l'une quelconque des revendications précédentes, dans laquelle le ressort comprend en outre un premier élément de valve (420) formé de manière solidaire, de préférence formé comme un élément circonférentiel en saillie vers l'extérieur, qui peut être formé comme l'un parmi une jupe circonférentielle ou un cône tronqué s'étendant vers la seconde partie d'extrémité et un disque planaire.

9. Pompe selon la revendication 8, dans laquelle le ressort comprend en outre un second élément de valve (436) formé de manière solidaire, formé comme un élément circonférentiel faisant saillie vers l'extérieur, de préférence formé comme l'un parmi un disque planaire et une jupe circonférentielle ou un cône tronqué s'étendant à partir de la seconde partie d'extrémité.

10. Pompe selon l'une quelconque des revendications précédentes, dans laquelle les première et seconde parties d'extrémité se mettent en prise avec l'entrée de pompe et la sortie de pompe respectivement, pour conserver une telle mise en prise pendant la compression de la chambre de pompe.

11. Pompe selon l'une quelconque des revendications précédentes, dans laquelle le corps de pompe et le ressort sont moulés par injection avec le même matériau ou un matériau différent.

12. Pompe selon l'une quelconque des revendications précédentes, se composant uniquement de deux composants, à savoir le corps de pompe et le ressort, moyennant quoi le corps de pompe et le ressort interagissent pour définir une valve d'entrée à une voie et une valve de sortie à une voie.

13. Ensemble de pompe (300) comprenant la pompe selon l'une quelconque des revendications précédentes et une paire de manchons agencés pour interagir, de manière coulissante afin de guider la pompe pendant une course de pompage, comprenant un manchon fixe (310) mis en prise avec l'entrée de pompe et un manchon de coulissement (312) mis en prise avec la sortie de pompe.

14. Procédé pour distribuer un fluide d'une pompe selon l'une quelconque des revendications 1 à 12, le procédé comprenant l'étape consistant à exercer une force axiale sur le corps de pompe entre l'entrée de pompe et la sortie de pompe pour provoquer la compression axiale du ressort et une réduction de volume de la chambre de pompe.

15. Distributeur configuré pour réaliser le procédé selon la revendication 14 sur un emballage de distribution de fluide jetable comprenant un ensemble de pompe selon la revendication 13, raccordé de manière étanche à un récipient de produit pliable (200).
